# EUROPEAN PATENT APPLICATION

(11) **EP 4 718 535 A1**
(43) Date of publication of application: **01.04.2026**
(21) Application number: 24864791.9
(22) Date of filing: 14.09.2024
(51) Int. Cl.: H01M 4/525, H01M 4/505, H01M 4/62, H01M 10/0525, C01G 53/00

(54) **POSITIVE ELECTRODE ACTIVE MATERIAL AND PREPARATION METHOD THEREFOR, AND LITHIUM ION BATTERY**

(30) Priority: 15.09.2023 CN 202311197498
(71) Applicant: Ningbo Ronbay New Energy Technology Co., Ltd., Yuyao Ningbo, Zhejiang 315402 (CN)
(72) Inventor: YU, Jian, Ningbo, Zhejiang 315402 (CN); HUANG, Xiaoxiao, Ningbo, Zhejiang 315402 (CN); YUAN, Xujun, Ningbo, Zhejiang 315402 (CN)
(74) Representative: Bandpay & Greuter
(86) International application number: PCT/CN2024/119227
(87) International publication number: WO 2025/056076

(57) **Abstract**

A positive electrode material, a preparation method thereof and a lithium-ion battery are provided. A first aspect provides a positive electrode active material, where a chemical composition of the positive electrode active material is Li₁₊ₐ[NiₓCo_{y}Ml_{z}M2_{b}]O_{2±c}A_{d}, M1 is one or two of Mn or Al, M2 is one or more of Zr, Mg, Ti, Te, Al, Ca, Sr, Sb, Nb, Pb, V, Ge, Se, W, Mo, Zn, Ce, or Y; and A is one of F, Cl, or S. By controlling the Ni content in secondary particles of different particle sizes, the problem of non-uniform degradation of the secondary particles of different particle sizes during battery cycling can be avoided, thereby improving the cycling stability of lithium-ion batteries.

## Description

This application claims priority to Chinese Patent Application No. 202311197498.0, filed with the China National Intellectual Property Administration on September 15, 2023, entitled "Positive electrode Material, Preparation Method thereof, and Lithium-ion battery", which is hereby incorporated by reference in its entirety.

### TECHNICAL FIELD

This present application relates to a positive electrode material, a preparation method thereof and a lithium-ion battery, and relates to the technology field of lithium-ion batteries.

### BACKGROUND

Lithium-ion batteries are secondary batteries that primarily rely on the movement of lithium ions between a positive electrode and a negative electrode to work. Positive electrode active materials are a decisive factor for the performance of lithium-ion batteries and directly determine the comprehensive performance of lithium-ion batteries. Ternary positive electrode active materials, such as lithium nickel cobalt manganese oxide (NCM) and lithium nickel cobalt aluminum oxide (NCA), are currently research hotspots among positive electrode active materials. However, among existing materials, the cycling stability of ternary positive electrode active materials remains to be improved.

### SUMMARY

The present application provides a positive electrode active material and a preparation method thereof for improving the structural stability of ternary positive electrode active materials and improving the cycling performance of lithium-ion batteries.

The present application further provides a lithium-ion battery including the above-mentioned positive electrode active material, which exhibits good cycling performance.
A first aspect of the present application provides a positive electrode active material, where a chemical composition of the positive electrode active material is Li₁₊ₐ[NiₓCo_{y}Ml_{z}M2_{b}]O_{2±c}A_{d}, 0 < a < 0.2, 0.5 ≤ x < 1, 0 < y < 0.3, 0 < z < 0.3, 0 < b < 0.2, c < 0.02, 0 ≤ d ≤ 0.05, and x + y + z + b = 1;
M1 is one or two of Mn or Al, M2 is one or more of Zr, Mg, Ti, Te, Al, Ca, Sr, Sb, Nb, Pb, V, Ge, Se, W, Mo, Zn, Ce, or Y; and A is one of F, Cl, or S;
a X value corresponding to Ni element in the chemical composition of first particles is X1, and a X value corresponding to Ni element in the chemical composition of second particles is X2, 0.005 ≤ (X1-X2) ≤ 0.07;
the first particles refer to particles having a particle size equal to D10 of the positive electrode active material, and the second particles refer to particles having a particle size equal to D90 of the positive electrode active material.

In an embodiment, a Y value corresponding to Co element in the chemical composition of the first particles is Y1, and a Y value corresponding to Co element in the chemical composition of the second particles is Y2, Y2 > Y1.

In an embodiment, (X1 - X2) > (Y2 - Y1).

In an embodiment, a Z value corresponding to M1 element in the chemical composition of the first particles is Z1, and a Z value corresponding to M1 element in the chemical composition of the second particles is Z2, Z2 > Z1.

In an embodiment, (X1 - X2) > (Z2 - Z1).

In an embodiment, a b value corresponding to M2 element in the chemical composition of the first particles is b1, and a b value corresponding to M2 element in the chemical composition of the second particles is b2, b1 = b2.

In an embodiment, the first particles are composed of primary particles having a size of R1, and the second particles are composed of primary particles having a size of R2, R1 < R2.

In an embodiment, R1 ≥ 0.85 R2.

A second aspect of the present application provides a preparation method for the positive electrode active material as described above, including the following steps:
mixing a nickel source, a cobalt source, and an M1 source to prepare a positive electrode active material precursor; the positive electrode active material precursor includes a first positive electrode active material precursor and a second positive electrode active material precursor,
where the first positive electrode active material precursor has size smaller than that of the second positive electrode active material precursor; a molar content of Ni element in a chemical composition of the first positive electrode active material precursor is W1, and a molar content of Ni element in the chemical composition of the second positive electrode active material precursor is W2, W1 - W2 ≥ 0.005;
mixing the positive electrode active material precursor, a lithium source, and an M2 source to form a mixed material;
sintering the mixed material in an oxygen or air atmosphere to obtain the positive electrode active material.

A third aspect of the present application provides a lithium-ion battery including the positive electrode active material as described above.

The present application provides a positive electrode active material. By controlling the Ni content in particles of different particle sizes, the problem of non-uniform degradation of the secondary particles of different particle sizes during battery cycling can be avoided, thereby improving the cycling stability of lithium-ion batteries.

### DESCRIPTION OF EMBODIMENTS

To make the objectives, technical solutions, and advantages of the present application clearer, the following clearly and comprehensively describes the technical solutions in embodiments of the present application with reference to embodiments of the present application. Apparently, the described embodiments are merely a part rather than all embodiments of the present application. All other embodiments obtained by persons of ordinary skill in the art based on embodiments of the present application without creative effort shall fall within the protection scope of the present application .
A first aspect of the present application provides a positive electrode active material, where a chemical composition of the positive electrode active material is Li₁₊ₐ[NiₓCo_{y}M_{1z}M_{2b}]O_{2±c}A_{d}, 0 < a < 0.2, 0.5 ≤ x < 1, 0 < y < 0.3, 0 < z < 0.3, 0 < b < 0.2, c < 0.02, 0 ≤ d ≤ 0.05, and x + y + z + b = 1;
M1 is one or two of Mn or Al, M2 is one or more of Zr, Mg, Ti, Te, Al, Ca, Sr, Sb, Nb, Pb, V, Ge, Se, W, Mo, Zn, Ce, or Y; and A is one of F, Cl, or S.

The positive electrode active material provided by the present application is a ternary material of lithium nickel cobalt manganese oxide (NCM) or lithium nickel cobalt aluminum oxide (NCA). In addition, a doping element M2 and an element A may be further included. M2 is specifically selected from one or more of Zr, Mg, Ti, Te, Al, Ca, Sr, Sb, Nb, Pb, V, Ge, Se, W, Mo, Zn, Ce, or Y. A is one of F, Cl, or S.

Further, M2 is selected from one or more of Zr, Mg, Ti, Al, Sr, Mo, Ce, or Y.

Further, A is F.

The present application does not impose excessive restrictions on x, y, z, a, b, c, and d within the above-defined ranges, they are acceptable as long as they fall within the corresponding ranges.

The positive electrode active material provided by the present application is obtained by the mixing of a plurality of secondary particles. Particle sizes of the secondary particles follow a normal distribution in the positive electrode active material. According to the distribution of the secondary particles in the positive electrode active material, the secondary particles are classified, where first particles refer to particles having a particle size equal to D10 of the positive electrode active material, and second particles refer to particles having a particle size equal to D90 of the positive electrode active material. D10 refers to a particle size at which particle size distribution reaches 10%, and D90 refers to a particle size at which particle size distribution reaches 90%. These values may be determined and screened according to conventional particle size measurement methods in the art.

Since the first particles have a smaller particle size, the structural stability of the first particles during cycling of a lithium-ion battery is significantly better than that of the second particles having a larger particle size. However, as Ni element content in the particles increases, the structural stability of the particles during cycling of the lithium-ion battery decreases. Therefore, in the present application, the Ni content on a surface of each of the first particles is increased to be higher than the Ni content on a surface of each of the second particles, so that the secondary particles having different particle sizes have a substantially balanced structural stability. This avoids a problem of rapid decay of battery capacity caused by the difference in structural stability of the secondary particles having different particle sizes. Specifically, an X value corresponding to Ni element in the chemical composition of the first particles is X1, and an X value corresponding to Ni element in the chemical composition of the second particles is X2, and (X1 - X2) ≥ 0.005.

As the Ni content in the secondary particles is increased, the cycling performance of the battery tends to decrease. Therefore, a difference (X1 - X2) should not exceed 0.07, i.e., 0.005 ≤ (X1 - X2) ≤ 0.07; otherwise, it may lead to capacity decay of the lithium-ion battery.

Further, 0.005 ≤ (X1 - X2) ≤ 0.06. Furthermore, 0.01 ≤ (X1 - X2) ≤ 0.05.

In one embodiment, a Y value corresponding to Co element in the chemical composition of the first particles is Y1, and a Y value corresponding to Co element in the chemical composition of the second particles is Y2, Y2 > Y1. By increasing Co content in the second particles, the structural stability of the second particles may be improved, thereby reducing the difference in structural stability between the first and second particles and thus enhancing the cycling performance of the lithium-ion battery.

Further, (X1 - X2) > (Y2 - Y1), meaning that a difference in Co element content between the first and second particles is smaller than a difference in Ni element content between the first and second particles. This helps to reduce the usage amount of Co element and thus lower the preparation cost of the positive electrode active material.

In one embodiment, a Z value corresponding to M1 element in the chemical composition of the first particles is Z1, and a Z value corresponding to M1 element in the chemical composition of the second particles is Z2, Z2 > Z1. By increasing M1 element content in the second particles, the structural stability of the second particles may be improved, thereby reducing the difference in structural stability between the first and second particles and enhancing the cycling performance of the lithium-ion battery.

Further, (X1 - X2) > (Z2 - Z1), meaning that a difference in M1 element content between the first and second particles is smaller than a difference in Ni element content between the first and second particles. When the difference in Ni element content between the first and second particles is less than or equal to the difference in M1 element content between the first and second particles, it is not conducive to improving the structural stability of the secondary particles, and thus the cycling stability and capacity of the lithium-ion battery may be affected.

In one embodiment, a b value corresponding to M2 element in the chemical composition of the first particles is b1, and a b value corresponding to M2 element in the chemical composition of the second particles is b2, b1 = b2, i.e., X1 + Y1 + Z1 = X2 + Y2 + Z2. Since even a small doping amount of M2 element may lead to significant change in performance, doping amounts of M2 element in the first and second particles are not adjusted in the present application, and both doping amounts may be the same.

In one embodiment, secondary particles are formed by the agglomeration of primary particles. The primary particles forming the first particles have a size of R1, and the primary particles forming the second particles have a size of R2, R1 < R2. A smaller size of the primary particles of the first particles helps to improve the capacity of the lithium-ion battery, while a larger particle size of the primary particles of the second particles helps to reduce the particles formed and improve strength of the particles, thereby ensuring the stability of the positive electrode active material. The size of the primary particles may be measured by a scanning electron microscope image.

Further, R1 ≥ 0.85 R2.

A second aspect of the present application provides a preparation method for the positive electrode active material as described in any one of the above, including the following steps:
mixing a nickel source, a cobalt source, and an M1 source to prepare a positive electrode active material precursor; the positive electrode active material precursor includes a first positive electrode active material precursor and a second positive electrode active material precursor;
where the first positive electrode active material precursor has a size smaller than that of the second positive electrode active material precursor; a molar content of Ni element in a chemical composition of the first positive electrode active material precursor is W1, and a molar content of Ni element in the chemical composition of the second positive electrode active material precursor is W2, W1 - W2 > 0.005;
mixing the positive electrode active material precursor, a lithium source, and an M2 source to form a mixed material;
sintering the mixed material in an oxygen or air atmosphere to obtain the positive electrode active material.

In one specific embodiment, a preparation method for the above-mentioned positive electrode active material specifically includes the following steps.

Step 1: a nickel source, a cobalt source, and an M1 source are mixed to prepare a positive electrode active material precursor.

First, a positive electrode active material precursor is prepared by a coprecipitation method. Specifically, a nickel source, a cobalt source, and a M1 source are formulated into a soluble mixed solution, and then a precipitating agent or a complexing agent is added. By controlling reaction conditions, a spherical-like positive electrode active material precursor is formed.

The M1 source may be a manganese salt and/or an aluminum salt. The present application does not impose excessive restrictions on the types of the nickel source, cobalt source, and M1 source, and they may be conventional materials in the art.

To achieve different contents of Ni element in the first and second particles, two positive electrode active material precursors having different sizes may be mixed, and contents of Ni element in the two positive electrode active material precursors having different sizes are different. Therefore, the positive electrode active material precursor includes a first positive electrode active material precursor and a second positive electrode active material precursor. The first positive electrode active material precursor has a size smaller than that of the second positive electrode active material precursor. A molar content of Ni element in a chemical composition of the first positive electrode active material precursor is W1, and a molar content of Ni element in the chemical composition of the second positive electrode active material precursor is W2, W1 - W2 ≥ 0.005.

Step 2: the positive electrode active material precursor, a lithium source, and an M2 source are mixed to form a mixed material.

The present application does not specifically limit the lithium source and the M2 source, and they may be conventional materials in the art. For example, the lithium source may be lithium hydroxide, lithium carbonate, lithium oxide, etc.; the M2 source may be any oxide or hydroxide containing M2, such as ZrO₂, MgO, Mg(OH)₂, TiO, Al₂O₃, SrO, MoO₃, CeO₂, Y₂O₃, etc.

The positive electrode active material precursor, lithium source, and M2 source are mixed according to a certain molar ratio, and the mixture is fully mixed. The mixing process may be carried out in equipment such as high-speed mixing equipment, sand grinding equipment, ball mill equipment, plow mixer equipment, inclined mixer equipment, etc., so that the mixed materials are fully mixed and crushed.

Step 3: the mixed material is sintered in an oxygen or air atmosphere to obtain the positive electrode active material.

The mixed material is sintered according to conventional technical means in the art. The sintering treatment may be carried out in high-temperature sintering equipment such as a muffle furnace, a tunnel kiln, a roller hearth kiln, or a tube furnace. During the sintering process, oxygen or air is introduced, and a sintering temperature is controlled to be no lower than 750 °C. After sintering for 12-20 hours, cooling is performed to obtain the positive electrode active material.

A third aspect of the present application provides a lithium-ion battery including the positive electrode active material as described in any one of the above.

Based on the positive electrode active material provided in the first aspect of the present application, the lithium-ion battery provided by the present application exhibits good cycling performance.

In one specific embodiment, the present application imposes no limitation on the specific structure of the lithium-ion battery. For example, the battery may be a prismatic battery, a cylindrical battery, etc.

The lithium-ion battery provided by the present application includes an electrode assembly, a casing, and an electrolyte solution, where the electrode assembly includes a positive electrode sheet, a separator, and a negative electrode sheet. The positive electrode sheet includes a positive current collector and a positive electrode active material layer provided on a surface of the positive current collector, and the positive electrode active material layer includes the aforementioned positive electrode active material.

In addition to the aforementioned positive electrode active material, the positive electrode active material layer further includes a conductive agent and a binder. The conductive agent and the binder may be not particularly selected and may be conventionally selected in the art. For example, the conductive agent may be selected from one or more of conductive carbon black, acetylene black, ketjen black, conductive graphite, conductive carbon fiber, carbon nanotubes, single-walled carbon nanotubes, multi-walled carbon nanotubes, and carbon fiber; the binder may be selected from one or more of polyvinylidene fluoride (PVDF), polytetrafluoroethylene (PTFE), and lithium polyacrylate (PAALi).

The negative electrode sheet includes a negative current collector and a negative electrode active material layer provided on a surface of the negative current collector. The negative electrode active material layer includes a negative electrode active material, a conductive agent, and a binder, where the negative electrode active material is selected from one or more of artificial graphite, natural graphite, hard carbon, mesophase carbon microbeads, lithium titanate, silicon carbon, and silicon monoxide.

The separator, the casing, and the electrolyte solution are all conventional materials in the art.

The following examples are provided to demonstrate a positive electrode active material of the present application.

### Example 1

This example provides a preparation method for a positive electrode active material, including the following steps:
step 1: mixing and dissolving a nickel salt, a cobalt salt, and a manganese salt in a ratio of 83.2:7.4:9.4; adding a precipitating agent or a complexing agent, and controlling reaction conditions to form a spherical-like first positive electrode active material precursor with a particle size of 4.5 µm;
mixing and dissolving the nickel salt, the cobalt salt, and the manganese salt in a ratio of 80.6:9.6:9.8; adding the precipitating agent or the complexing agent and controlling reaction conditions to form a spherical-like second positive electrode active material precursor with a particle size of 14.1 µm;
step 2: mixing the first positive electrode active material precursor, the second positive electrode active material precursor, and lithium hydroxide in a total ratio of Li:TM = 1.05; adding 1 mol% of ZrO₂ (where 1% refers to the value of Zr:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 765 °C for 14 hours; and mechanically crushing the sintered mixed material to obtain the positive electrode active material.

### Example 2

This example provides a preparation method for a positive electrode active material, including the following steps;
step 1: mixing and dissolving a nickel salt, a cobalt salt, and a manganese salt in a ratio of 81.9:7.2:10.9; adding a precipitating agent or a complexing agent; and controlling reaction conditions to form a spherical-like first positive electrode active material precursor with a particle size of 4.1 µm;
mixing and dissolving the nickel salt, the cobalt salt, and the manganese salt in a ratio of 81.4:7.4:11.2; adding the precipitating agent or the complexing agent and controlling reaction conditions to form a spherical-like second positive electrode active material precursor with a particle size of 14.5 µm;
step 2: mixing the first positive electrode active material precursor, the second positive electrode active material precursor, and lithium hydroxide in a total ratio of Li:TM = 1.05; adding 1 mol% of ZrO₂ (where 1% refers to the value of Zr: TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 775 °C for 18 hours; and mechanically crushing the sintered mixed material to obtain the positive electrode active material.

### Example 3

This example provides a preparation method for a positive electrode active material, including the following steps:
step 1: mixing and dissolving a nickel salt, a cobalt salt, and a manganese salt in a ratio of 83.6:7.9:8.5; adding a precipitating agent or a complexing agent; and controlling reaction conditions to form a spherical-like first positive electrode active material precursor with a particle size of 3.9 µm;
mixing and dissolving the nickel salt, the cobalt salt, and the manganese salt in a ratio of 77.6:11.8:11.2; adding the precipitating agent or the complexing agent and controlling reaction conditions to form a spherical-like second positive electrode active material precursor with a particle size of 15.1 µm;
step 2: mixing the first positive electrode active material precursor, the second positive electrode active material precursor, and lithium hydroxide in a total ratio of Li:TM = 1.05; adding 1 mol% of ZrO₂ (where 1% refers to the value of Zr: TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 775 °C for 14 hours; and mechanically crushing the sintered mixed material to obtain the positive electrode active material.

### Example 4

This example provides a preparation method for a positive electrode active material, including the following steps;
step 1: mixing and dissolving a nickel salt, a cobalt salt, and a manganese salt in a ratio of 82.7:7.7:9.6; adding a precipitating agent or a complexing agent; and controlling reaction conditions to form a spherical-like first positive electrode active material precursor with a particle size of 3.6 µm;
mixing and dissolving the nickel salt, the cobalt salt, and the manganese salt in a ratio of 81.7:8.5:9.8; adding the precipitating agent or the complexing agent; and controlling reaction conditions to form a spherical-like second positive electrode active material precursor with a particle size of 14.0 µm;
step 2: mixing the first positive electrode active material precursor, the second positive electrode active material precursor, and lithium hydroxide in a total ratio of Li:TM = 1.05; adding 1 mol% of SrO (where 1% refers to the value of Sr:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 775 °C for 14 hours; and mechanically crushing the sintered mixed material to obtain the positive electrode active material.

### Example 5

This example provides a preparation method for a positive electrode active material, including the following steps;
step 1: mixing and dissolving a nickel salt, a cobalt salt, and a manganese salt in a ratio of 82.5:8:9.5; adding a precipitating agent or a complexing agent; and controlling reaction conditions to form a spherical-like first positive electrode active material precursor with a particle size of 3.9 µm;
mixing and dissolving the nickel salt, the cobalt salt, and the manganese salt in a ratio of 77.5:12.6:9.9; adding the precipitating agent or the complexing agent and controlling reaction conditions to form a spherical-like second positive electrode active material precursor with a particle size of 14.9 µm;
step 2: mixing the first positive electrode active material precursor, the second positive electrode active material precursor, and lithium hydroxide in a total ratio of Li:TM = 1.05; adding 1 mol% of TiO₂ (where 1% refers to the value of Ti:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 770 °C for 14 hours; and mechanically crushing the sintered mixed material to obtain the positive electrode active material.

### Example 6

This example provides a preparation method for a positive electrode active material, including the following steps;
step 1: mixing and dissolving a nickel salt, a cobalt salt, and an aluminum salt in a ratio of 91.2:6:2.8%; adding a precipitating agent or a complexing agent and controlling reaction conditions to form a spherical-like first positive electrode active material precursor with a particle size of 4.1 µm;
mixing and dissolving the nickel salt, the cobalt salt, and the aluminum salt in a ratio of 87.3:9.5:3.2; adding the precipitating agent or the complexing agent and controlling reaction conditions to form a spherical-like second positive electrode active material precursor with a particle size of 14.8 µm;
step 2: mixing the first positive electrode active material precursor, the second positive electrode active material precursor, and lithium oxide in a total ratio of Li:TM = 1.05; adding 1 mol% of Al₂O₃ (where 1% refers to the value of Al:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 780 °C for 20 hours; and mechanically crushing the sintered mixed material to obtain the positive electrode active material.

### Example 7

This example provides a preparation method for a positive electrode active material, including the following steps:
step 1: mixing and dissolving a nickel salt, a cobalt salt, and an aluminum salt in a ratio of 91.5:6.2:2.3; adding a precipitating agent or a complexing agent and controlling reaction conditions to form a spherical-like first positive electrode active material precursor with a particle size of 3.5 µm;
mixing and dissolving the nickel salt, the cobalt salt, and the aluminum salt in a ratio of 87:10.4:2.6; adding the precipitating agent or the complexing agent and controlling reaction conditions to form a spherical-like second positive electrode active material precursor with a particle size of 10.3 µm;
step 2: mixing the first positive electrode active material precursor, the second positive electrode active material precursor, and lithium hydroxide in a total ratio of Li:TM = 1.05; adding 1 mol% of Y₂O₃ (where 1% refers to the value of Y:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 750 °C for 12 hours; and mechanically crushing the sintered mixed material to obtain the positive electrode active material.

### Example 8

This example provides a preparation method for a positive electrode active material, including the following steps:
step 1: mixing and dissolving a nickel salt, a cobalt salt, and a manganese salt in a ratio of 82.5:7.9:9.6; adding a precipitating agent or a complexing agent and controlling reaction conditions to form a spherical-like first positive electrode active material precursor with a particle size of 3.5 µm;
mixing and dissolving the nickel salt, the cobalt salt, and the manganese salt in a ratio of 77.2:9.4:13.4; adding the precipitating agent or the complexing agent and controlling reaction conditions to form a spherical-like second positive electrode active material precursor with a particle size of 14.3 µm;
step 2: mixing the first positive electrode active material precursor, the second positive electrode active material precursor, and lithium hydroxide in a total ratio of Li:TM = 1.05; adding 0.5 mol% of SrO and 0.5 mol% of MoO₃ (where 0.5% refers to the value of Sr:TM and the value of Mo:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 760 °C for 18 hours; and mechanically crushing the sintered mixed material to obtain the positive electrode active material.

### Example 9

This example provides a preparation method for a positive electrode active material, including the following steps:
step 1: mixing and dissolving a nickel salt, a cobalt salt, and an aluminum salt in a ratio of 82.9:15.2:1.9; adding a precipitating agent or a complexing agent and controlling reaction conditions to form a spherical-like first positive electrode active material precursor with a particle size of 3.9 µm;
mixing and dissolving the nickel salt, the cobalt salt, and the aluminum salt in a ratio of 79.2:17.1:2.7; adding the precipitating agent or the complexing agent and controlling reaction conditions to form a spherical-like second positive electrode active material precursor with a particle size of 14.2 µm;
step 2: mixing the first positive electrode active material precursor, the second positive electrode active material precursor, and lithium hydroxide in a total ratio of Li:TM = 1.05; adding 0.5 mol% of Al₂O₃ and 0.5 mol% of CeO₂ (where 0.5% refers to the value of Al:TM and the value of Ce:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 760 °C for 17 hours; and mechanically crushing the sintered mixed material to obtain the positive electrode active material.

### Example 10

This example provides a preparation method for a positive electrode active material, including the following steps:
step 1: mixing and dissolving a nickel salt, a cobalt salt, and an aluminum salt in a ratio of 61:10.8:28.2; adding a precipitating agent or a complexing agent and controlling reaction conditions to form a spherical-like first positive electrode active material precursor with a particle size of 3.8 µm;
mixing and dissolving the nickel salt, the cobalt salt, and the manganese salt in a ratio of 58.9:11.5:29.6; adding the precipitating agent or the complexing agent and controlling reaction conditions to form a spherical-like second positive electrode active material precursor with a particle size of 14.2 µm;
step 2: mixing the first positive electrode active material precursor, the second positive electrode active material precursor, and lithium hydroxide in a total ratio of Li:TM = 1.05; adding 1 mol% of MgO (where 1% refers to the value of Mg:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 890 °C for 15 hours; and mechanically crushing the sintered mixed material to obtain the positive electrode active material.

### Comparative Example 1

This example provides a preparation method for a positive electrode active material, including the following steps:
step 1: mixing and dissolving a nickel salt, a cobalt salt, and a manganese salt in a ratio of 82.1:7.4:10.5; adding a precipitating agent or a complexing agent and controlling reaction conditions to form a spherical-like first positive electrode active material precursor with a particle size of 4.0 µm;
mixing and dissolving the nickel salt, the cobalt salt, and the manganese salt in a ratio of 82.1:7.4:10.5; adding the precipitating agent or the complexing agent and controlling reaction conditions to form a spherical-like second positive electrode active material precursor with a particle size of 14.4 µm;
step 2: mixing the first positive electrode active material precursor, the second positive electrode active material precursor, and lithium hydroxide in a total ratio of Li:TM = 1.05; adding 1 mol% of ZrO₂ (where 1% refers to the value of Zr:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 770 °C for 16 hours; and mechanically crushing the sintered mixed material to obtain the positive electrode active material.

### Comparative Example 2

This example provides a preparation method for a positive electrode active material, including the following steps:
step 1: mixing and dissolving a nickel salt, a cobalt salt, and a manganese salt in a ratio of 82.4:7.3:10.3; adding a precipitating agent or a complexing agent and controlling reaction conditions to form a spherical-like first positive electrode active material precursor with a particle size of 3.9 µm;
mixing and dissolving the nickel salt, the cobalt salt, and the manganese salt in a ratio of 75.1:11.9:13; adding the precipitating agent or the complexing agent and controlling reaction conditions to form a spherical-like second positive electrode active material precursor with a particle size of 14.3 µm;
step 2: mixing the first positive electrode active material precursor, the second positive electrode active material precursor, and lithium hydroxide in a total ratio of Li:TM = 1.05; adding 1 mol% of ZrO₂ (where 1% refers to the value of Zr: TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 790 °C for 18 hours; and mechanically crushing the sintered mixed material to obtain the positive electrode active material.

### Comparative Example 3

This example provides a preparation method for a positive electrode active material, including the following steps:
step 1: mixing and dissolving a nickel salt, a cobalt salt, and a manganese salt in a ratio of 82.1:7.7:10.2; adding a precipitating agent or a complexing agent and controlling reaction conditions to form a spherical-like first positive electrode active material precursor with a particle size of 4.3 µm;
mixing and dissolving the nickel salt, the cobalt salt, and the manganese salt in a ratio of 77.7:7.7:14.6; adding the precipitating agent or the complexing agent and controlling reaction conditions to form a spherical-like second positive electrode active material precursor with a particle size of 14.2 µm;
step 2: mixing the first positive electrode active material precursor, the second positive electrode active material precursor, and lithium hydroxide in a total ratio of Li:TM = 1.05; adding 1 mol% of SrO (where 1% refers to the value of Sr:TM); and mixing the mixture using a high-speed mixer at 800 rpm for 15 minutes to obtain a mixed material;
step 3: loading 2.5 kg of the mixed material into a crucible; sintering the mixed material in an oxygen atmosphere in a box-type furnace at 785 °C for 17 hours; and mechanically crushing the sintered mixed material to obtain the positive electrode active material.

### Test Example

Particle sizes of the positive electrode active materials prepared in Examples 1-10 and Comparative Examples 1-3 are measured by a particle size analyzer; D10 and D90 are counted; and molar contents of Ni, Co, M1, and M2 elements in particles corresponding to D10 and D90 are measured by an ICP spectrometer. Test results are shown in Table 1.

The positive electrode active materials prepared in Examples 1-10 and Comparative Examples 1-3 are subjected to a pressure test on secondary particles of different particle sizes using a micro dynamic hardness tester, whose indenter is a 50 µm flat indenter. At least five points are tested, and an average value is taken as the strength of a corresponding particle. Test results are shown in Table 1.

**Table 1**

| | | Particle size | Ni (mol %) | Co (mol %) | M1 (mol %) | M2 (mol %) | M1 element | M2 element | Particle strength (Mpa) |
|---|---|---|---|---|---|---|---|---|---|
| Example 1 | D10 | 4.7 | 82.4 | 7.3 | 9.3 | 1 | Mn | Zr | 140.7 |
| | D90 | 13.8 | 79.8 | 9.5 | 9.7 | 1 | Mn | Zr | 108.5 |
| Example 2 | D10 | 4.4 | 81.1 | 7.1 | 10.8 | 1 | Mn | Zr | 141.3 |
| | D90 | 14.3 | 80.6 | 7.3 | 11.1 | 1 | Mn | Zr | 100.1 |
| Example 3 | D10 | 4.1 | 82.8 | 7.8 | 8.4 | 1 | Mn | Zr | 139.6 |
| | D90 | 14.7 | 76.8 | 11.7 | 10.5 | 1 | Mn | Zr | 112.4 |
| Example 4 | D10 | 3.9 | 81.9 | 7.6 | 9.5 | 1 | Mn | Sr | 142.7 |
| | D90 | 13.8 | 80.9 | 8.4 | 9.7 | 1 | Mn | Sr | 108.2 |
| Example 5 | D10 | 4.2 | 81.7 | 7.9 | 9.4 | 1 | Mn | Ti | 141.8 |
| | D90 | 14.5 | 76.7 | 12.5 | 9.8 | 1 | Mn | Ti | 111.9 |
| Example 6 | D10 | 4.4 | 90.3 | 5.9 | 2.8 | 1 | Al | Al | 135.7 |
| | D90 | 14.6 | 86.4 | 9.4 | 3.2 | 1 | Al | Al | 97.3 |
| Example 7 | D10 | 3.7 | 90.6 | 6.1 | 2.3 | 1 | Al | Y | 135.3 |
| | D90 | 10.2 | 86.1 | 10.3 | 2.6 | 1 | Al | Y | 107.4 |
| Example 8 | D10 | 3.8 | 81.7 | 7.8 | 9.5 | 1 | Mn | Sr, Mo | 141.8 |
| | D90 | 14.1 | 76.4 | 9.3 | 13.3 | 1 | Mn | Sr, Mo | 112.9 |
| Example 9 | D10 | 4.1 | 82.1 | 15 | 1.9 | 1 | Al | Al, Ce | 140.3 |
| | D90 | 13.9 | 79.2 | 17.1 | 2.7 | 1 | Al | Al, Ce | 109.2 |
| Example 10 | D10 | 4 | 60.4 | 10.7 | 27.9 | 1 | Al | Mg | 151.9 |
| | D90 | 13.9 | 58.3 | 11.4 | 29.3 | 1 | Mn | Mg | 118.7 |
| Compara tive Example 1 | D10 | 4.2 | 81.3 | 7.3 | 10.4 | 1 | Mn | Zr | 141.6 |
| | D90 | 14.2 | 81.3 | 7.3 | 10.4 | 1 | Mn | Zr | 93.4 |
| Compara tive Example 2 | D10 | 4.1 | 81.6 | 7.2 | 10.2 | 1 | Mn | Zr | 139.9 |
| | D90 | 14.1 | 74.3 | 11.8 | 12.9 | 1 | Mn | Zr | 113.1 |
| Compara tive Example 3 | D10 | 4.5 | 81.3 | 7.6 | 10.1 | 1 | Mn | Sr | 141.2 |
| | D90 | 13.9 | 76.9 | 7.6 | 14.5 | 1 | Mn | Sr | 112.7 |

Positive electrode sheets are prepared using the positive electrode active materials prepared in Examples 1-10 and Comparative Examples 1-3. Each positive electrode sheet together with a lithium sheet, a polyethylene separator, and an electrolyte solution (the electrolyte solution is LiPF₆, and a solvent is EC/DMC) are assembled into a coin cell. A discharge capacity of the coin cell at the first cycle is measured under a charge/discharge condition of 0.2C, and is recorded as a coin cell capacity, and a specific capacity (mAh/g) is calculated based on coin cell capacity/cell weight. Calculation results are shown in Table 2.

Positive electrode sheets are prepared using the positive electrode active materials prepared in Examples 1-10 and Comparative Examples 1-3. Each positive electrode sheet together with a graphite negative electrode, a polyethylene separator, and an electrolyte solution (the electrolyte solution is LiPF₆, and a solvent is EC/DMC) are assembled into a full cell. A capacity retention (%) of the full cell after 500 cycles is tested under conditions of 45 °C and 1C. Test results are shown in Table 2.

**Table 2**

| | X1-X2 | Y2-Y1 | Z2-Z1 | R1/R2 | Capacity retention after 500 cycles at high temperature | Specific capacity |
|---|---|---|---|---|---|---|
| Example 1 | 0.026 | 0.022 | 0.004 | 0.91 | 90.30% | 210.3 |
| Example 2 | 0.005 | 0.002 | 0.003 | 0.85 | 87.10% | 212.4 |
| Example 3 | 0.06 | 0.039 | 0.021 | 0.89 | 88.70% | 203.8 |
| Example 4 | 0.01 | 0.008 | 0.002 | 0.88 | 89.60% | 210.7 |
| Example 5 | 0.05 | 0.046 | 0.004 | 0.90 | 88.90% | 204.2 |
| Example 6 | 0.039 | 0.035 | 0.004 | 0.86 | 88.60% | 218.7 |
| Example 7 | 0.045 | 0.042 | 0.003 | 0.97 | 89.40% | 217.6 |
| Example 8 | 0.053 | 0.015 | 0.038 | 0.98 | 88.30% | 201.7 |
| Example 9 | 0.029 | 0.021 | 0.008 | 0.92 | 90.10% | 209.7 |
| Example 10 | 0.021 | 0.007 | 0.014 | 0.92 | 90.7% | 190.3 |
| Comparative Example 1 | 0 | 0 | 0 | 0.90 | 85.70% | 211.7 |
| Comparative Example 2 | 0.073 | 0.046 | 0.027 | 0.98 | 83.60% | 197.2 |
| Comparative Example 3 | 0.044 | 0 | 0.044 | 0.86 | 79.30% | 199.2 |

According to the data provided in Table 2, compared with Comparative Examples 1-2, the lithium-ion batteries provided in Examples 1-3 exhibit higher capacity retention. This indicates that the difference between molar contents of Ni element in the first and second particles should be maintained within a range of 0.005-0.07. In addition, the change in Ni content in the positive electrode active materials provided in Examples 1-3 does not affect the specific capacity of the lithium-ion batteries. According to the data provided in Examples 1-3, it can be seen that as the difference between X1 and X2 increases, the capacity retention of the lithium-ion batteries increases. However, when the difference between X1 and X2 is greater than 6%, the capacity retention of the lithium-ion batteries decreases, indicating that a preferred range of X1-X2 is 0.01-0.05. According to Comparative Example 3, the difference between Mn element contents in the first and second particles should be smaller than the difference between Ni element contents in the first and second particles. When the difference between Ni element contents in the first and second particles is equal to the difference between Mn element contents in the first and second particles, it is not conducive to improving the specific capacity and capacity retention of the lithium-ion battery.

Finally, it should be understood that the aforementioned embodiments are merely intended to illustrate the technical solutions of the present application, and not to limit the present application. Although the present application has been described in detail with reference to the aforementioned embodiments, those skilled in the art should understand that modifications may still be made to the technical solutions described in the aforementioned embodiments, or some or all of technical features may be equivalently substituted. Such modifications or substitutions do not cause the essential nature of the corresponding technical solutions to depart from the scope of the technical solutions of embodiments of the present application.

## Claims

1. A positive electrode active material, wherein a chemical composition of the positive electrode active material is Li₁₊ₐ[NiₓCo_{y}Ml_{z}M2_{b}]O_{2±c}A_{d}, 0 < a < 0.2, 0.5 ≤ x < 1, 0 < y < 0.3, 0 < z < 0.3, 0 < b < 0.2, c < 0.02, 0 ≤ d ≤ 0.05, and x + y + z + b = 1;
M1 is one or two of Mn or Al, M2 is one or more of Zr, Mg, Ti, Te, Al, Ca, Sr, Sb, Nb, Pb, V, Ge, Se, W, Mo, Zn, Ce, or Y; and A is one of F, Cl, or S;
a X value corresponding to Ni element in the chemical composition of first particles is X1, and a X value corresponding to Ni element in the chemical composition of second particles is X2, 0.005 ≤ (X1 - X2) ≤ 0.07;
the first particles refer to particles having a particle size equal to D10 of the positive electrode active material, and the second particles refer to particles having a particle size equal to D90 of the positive electrode active material.

2. The positive electrode active material according to claim 1, wherein a Y value corresponding to Co element in the chemical composition of the first particles is Y1, and a Y value corresponding to Co element in the chemical composition of the second particles is Y2, Y2 > Y1.

3. The positive electrode active material according to claim 2, wherein (X1 - X2) > (Y2 - Y1).

4. The positive electrode active material according to claim 1, wherein a Z value corresponding to M1 element in the chemical composition of the first particles is Z1, and a Z value corresponding to M1 element in the chemical composition of the second particles is Z2, Z2 > Z1.

5. The positive electrode active material according to claim 4, wherein (X1 - X2) > (Z2 - Z1).

6. The positive electrode active material according to claim 1, wherein a b value corresponding to M2 element in the chemical composition of the first particles is b1, and a b value corresponding to M2 element in the chemical composition of the second particles is b2, b1 = b2.

7. The positive electrode active material according to claim 1, wherein the first particles are composed of primary particles having a size of R1, and the second particles are composed of primary particles having a size of R2, R1 < R2.

8. The positive electrode active material according to claim 7, wherein R1 ≥ 0.85 R2.

9. A preparation method for the positive electrode active material according to any one of claims 1-8, comprising the following steps:
mixing a nickel source, a cobalt source, and an M1 source to prepare a positive electrode active material precursor; the positive electrode active material precursor includes a first positive electrode active material precursor and a second positive electrode active material precursor,
wherein the first positive electrode active material precursor has a size smaller than that of the second positive electrode active material precursor; a molar content of Ni element in a chemical composition of the first positive electrode active material precursor is W1, and a molar content of Ni element in the chemical composition of the second positive electrode active material precursor is W2, W1 - W2 ≥ 0.005;
mixing the positive electrode active material precursor, a lithium source, and an M2 source to form a mixed material;
sintering the mixed material in an oxygen or air atmosphere to obtain the positive electrode active material.

10. A lithium-ion battery, comprising the positive electrode active material according to any one of claims 1-8.
